Europäisches Patentamt

European Patent Office

Office européen des brevets

(19)

(11) Veröffentlichungsnummer: **0 111 185**
**B1**

(12)

# EUROPÄISCHE PATENTSCHRIFT

(45) Veröffentlichungstag der Patentschrift:
08.10.86

(51) Int. Cl.⁴: **A 47 K 3/22** // A47H1/04

(21) Anmeldenummer: **83111459.0**

(22) Anmeldetag: **17.11.83**

(54) Rahmen, insbesondere für eine Duschtrennwand.

(30) Priorität: **09.12.82 DE 3245573**

(43) Veröffentlichungstag der Anmeldung:
**20.06.84 Patentblatt 84/25**

(45) Bekanntmachung des Hinweises auf die Patenterteilung:
**08.10.86 Patentblatt 86/41**

(84) Benannte Vertragsstaaten:
**AT BE CH FR GB IT LI NL SE**

(56) Entgegenhaltungen:
**BE - A - 891 820**
**CH - A - 445 749**
**DE - A - 3 117 046**

(73) Patentinhaber: **Baus, Heinz Georg,
Wartbodenstrasse 35, CH-3626 Hünibach-Thun (CH)**

(72) Erfinder: **Baus, Heinz Georg, Wartbodenstrasse 35,
CH-3626 Hünibach-Thun (CH)**

(74) Vertreter: **Klose, Hans, Dipl.-Phys.,
Kurfürstenstrasse 32, D-6700 Ludwigshafen (DE)**

ACTORUM AG

## Beschreibung

Die Erfindung bezieht sich auf einen Rahmen, insbesondere für eine Duschtrennwand, gemäss dem Oberbegriff von Patentanspruch 1.

Aus der BE-A-891 820 ist ein Rahmen für eine Duschtrennwand bekannt, dessen Profilschienen mittels eines Eckverbinders miteinander verbunden sind. Der Eckverbinder greift mit Zapfen jeweils in entsprechende Hohlkammern der Profilschienen, die an ihren Aussenflächen Verblendungsprofile enthalten. Der Eckverbinder weist ferner eine sektorförmige Ausnehmung auf, in welche ein Verblendungselement eingesetzt ist, das in der Farb- und Formgebung den Verblendungsprofilen angepasst ist. Ein derartiger Eckverbinder stellt ein zusätzliches Bauteil dar, das für eine hohe Festigkeit ausgelegt werden muss, um die Profilschienen des Rahmens funktionssicher zu verbinden. Ferner erfordert die Herstellung sowie die Befestigung des Verblendungselementes im Eckverbinder einen entsprechenden Aufwand. Ferner besteht bei derartigen Rahmen oftmals die Forderung, die Profilschienen am Einbauort zwecks Anpassung an die baulichen Gegebenheiten auf das erforderliche Mass zurecht zu schneiden. Hierbei können keine allzu hohen Anforderungen hinsichtlich Massgenauigkeit und Winkligkeit erreicht werden, so dass nachteilige Spalten zwischen den Profilschienen kaum zu vermeiden sind. Es wird hierdurch nicht nur der optische Eindruck nachteilig beeinflusst, sondern durch derartige Spalte können Verunreinigungen und Schmutz in den Rahmen eindringen; dies ist insbesondere bei Duschtrennwänden im Hinblick auf Hygieneanforderungen nachteilig.

Ferner ist es bekannt, Profilschienen eines Rahmens auch unmittelbar miteinander zu verbinden, wobei die Profilschienen auf Gehrung geschnitten und mittels Schrauben oder dergleichen miteinander verbunden werden. Eine derartige Gehrungsverbindung erfordert eine sorgfältige, winkelgenaue Fertigung, um im Verbindungsbereich ein Auseinanderklaffen der Profilschienen zu vermeiden und so das Eindringen von Schmutz und Verunreinigungen in den Rahmen zu vermeiden.

Der Erfindung liegt die Aufgabe zugrunde, den Rahmen der eingangs genannten Art dahingehend weiterzubilden, dass mit geringem konstruktivem Aufwand die Profilschienen miteinander verbindbar sind, wobei ein harmonischer Übergang von der einen zur anderen Profilschiene geschaffen und ein eventuell vorhandener Spalt oder dergleichen überbrückt werden soll.

Zur Lösung dienen die im Kennzeichen des Patentanspruchs 1 angegebenen Merkmale.

Das im Bereich der Rahmenecke vorgesehene Verblendungselement kann mittels des federnden Riegels mit der einen Profilschiene funktionssicher verbunden werden. Das Verblendungselement ist in seiner Oberflächenstruktur oder Ausgestaltung den Profilschienen und insbesondere auch deren Verblendungsprofilen angepasst, wodurch ein harmonischer Übergang von der einen Profilschiene zur anderen Profilschiene erhalten wird. Des weiteren ermöglicht das Verblendungselement, welches mit einem Seitenteil über die Stirnkante der anderen Profilschiene hinausragt, das Zurechtschneiden der anderen Profilschiene entsprechend den baulichen Gegebenheiten am Einbauort. Auch bei weniger präzisem Abschneiden der anderen Profilschiene wird mittels des Verblendungselements ein eventuell auftretender Spalt überdeckt, und das Eindringen von Schmutz und Fremdkörpern in den Rahmen wird insoweit unterbunden. Mit dem Verblendungselement können somit schräge oder unsaubere Schnittflächen der Profilschienen in zweckmässiger Weise überdeckt werden. Das Verblendungselement wird mit seinem federnden Riegel mit der Profilschiene einfach eingeklipst, und besondere Montagearbeiten oder Werkzeuge werden nicht benötigt. Das Verblendungselement ist preisgünstig herstellbar und kann ohne weiteres entsprechend der Oberflächenstruktur oder der Ausgestaltung der Oberflächen der Profilschienen ausgebildet sein, um so in einfacher Weise und ohne störende Nebeneffekte einen harmonischen Übergang von einer Profilschiene zur anderen zu erhalten. Ferner können Ungenauigkeiten beim Zurechtschneiden der Profilschienen in Kauf genommen und grössere Fertigungstoleranzen zugelassen werden, da ein eventueller Spalt im Bereich der Rahmenecke mittels des Verblendungselementes überdeckt wird.

In einer zweckmässigen Ausführungsform weist das Verblendungselement auf seiner Rückseite mindestens eine Führungsfläche auf, welcher eine Anlagefläche der einen Profilschiene zugeordnet ist. Hierdurch wird in einfacher Weise eine exakte Ausrichtung des Verblendungselementes bezüglich der genannten Profilschiene sichergestellt.

In einer weiteren Ausführungsform weist das Verblendungselement ein Mittelteil auf, welches in eine Längsnut der einen Profilschiene eingreift. Aufgrund des Mittelteils weist das Verblendungselement eine grosse Stabilität auf und kann daher in anderen Bereichen ggf. auch vergleichsweise dünn ausgebildet werden, ohne dass dadurch die zuverlässige Befestigung beeinträchtigt würde. Aufgrund des in die Längsnut eingreifenden Mittelteils wird ferner eine zuverlässige Fixierung und Führung des Verblendungselementes sichergestellt.

Eine weitere Ausführungsform ist dadurch gekennzeichnet, dass die Anlagefläche der Profilschiene an einer Seitenwand der Längsnut vorgesehen ist, wobei die Führungsfläche des Verblendungselements sich bevorzugt über dessen gesamte Länge erstreckt. Eine zuverlässige Ausrichtung und Fixierung des Verblendungselements ist in besonders einfacher Weise sichergestellt.

In einer anderen Ausgestaltung weist das Verblendungselement einen Ansatz auf, welcher in eine hinterschnittene Ausnehmung der Profilschiene eingreift. Ein sicherer Sitz des Verblendungselements in der Profilschiene wird erreicht. Einerseits greift der federnde Riegel und andererseits der genannte Ansatz in die jeweils hierfür vorgesehene Ausnehmung der Profilschiene ein, wodurch eine zweckmässige Kraftaufteilung erreicht wird.

In einer weiteren Ausgestaltung liegt das Verblendungselement mit seiner bevorzugt am verstärkten Mittelteil vorhandenen Grundfläche an der Bodenfläche der Längsnut an. Eine Beschädigung des Verblendungselements beim Einsetzen bzw. Einklipsen in die Profilschiene wird unterbunden, da die Bodenfläche einen Anschlag bildet und ein Durchbiegen oder gar Abbrechen des Verblendungselements verhindert wird.

Zweckmässig weist das Seitenteil eine geringe Dicke auf, welche bevorzugt im Bereich von 1 bis 4 mm und zweckmässig im Bereich von 1,5 bis 3 mm liegt. Aufgrund dieser geringen Dicke kann das Seitenteil die zugeordnete Profilschiene ohne weiteres überragen, ohne die Gestaltung des Rahmens nachteilig zu beeinflussen.

In einer zweckmässigen Weiterbildung ragt das Verblendungselement mit seinem Endteil in einer vorgegebenen Länge über die Stirnfläche des Verblendungsprofils der einen Profilschiene hinaus. Ungenauigkeiten oder Beschädigungen an der Stirnfläche des Verblendungsprofils werden in einfacher Weise überdeckt.

In einer besonderen Ausgestaltung weist die eine Profilschiene eine Ausnehmung, welche bevorzugt als eine Bohrung ausgebildet ist, auf, in welche ein im wesentlichen senkrecht zur Längsachse der Profilschiene ausgerichteter Zapfen des Verblendungselements eingreift. In einfacher Weise ist die Fixierung des Verblendungselements längs der Profilschiene sicher gestellt. Wird ferner der Zapfen mit wenigstens einem federnden Riegel versehen, so sind Zapfen und Riegel zu einer Einheit integriert, wodurch eine kostengünstige Fertigung erreicht wird.

In einer weiteren Ausführungsform weist das Verblendungselement wenigstens einen in Richtung der Längsachse sich erstreckenden Hebel auf, an dessen Ende der Riegel angeordnet ist, welcher in die seitliche Ausnehmung der Profilschiene und/oder deren Längsnut eingreift. Aufgrund des Hebels ist ein vergleichsweise grosser Federweg für den Riegel möglich, wodurch ein besonders einfaches Einsetzen bzw. Einklipsen des Verblendungselements in die Profilschiene erreicht wird.

In einer weiteren Ausführungsform weist das Verblendungselement eine von seiner Rückseite beabstandete Zunge auf, wobei am Ende der Zunge der in die Ausnehmung eingreifende Zapfen angeordnet ist. Hier bildet also Zunge mit Zapfen den erfindungsgemäss vorgeschlagenen Riegel, welcher nunmehr etwa senkrecht zur Bodenfläche der Profilschiene aufgrund des Abstandes zur Rückseite des Verblendungselements bewegbar ist. Bei dieser Ausführungsform kann das Verblendungselement auch sehr leicht wieder herausgenommen werden, da lediglich von der Rückseite der Profilschiene her der Zapfen aus der Ausnehmung herausgedrückt werden muss, um nachfolgend das Herausnehmen des Verblendungselements aus der Profilschiene und/oder deren Längsnut zu ermöglichen.

In einer alternativen Ausführungsform weist das Verblendungselement auf seiner Rückseite wenigstens einen nach aussen gekrümmten Steg auf, wobei in dem Steg eine Ausnehmung derart vorhanden ist, dass ein von der Rückseite beabstandeter Teil des Steges den federnden Riegel bildet. Die genannte Ausnehmung kann in Form eines Schlitzes oder dgl. in einfacher Weise beim Formpressen in den an der Rückseite des Verblendungselements vorgesehenen Steg angeordnet werden. Es ist also auf der Rückseite des Verblendungselements ein sich bevorzugt über die gesamte Länge erstreckender Steg vorhanden, welcher aufgrund der erfindungsgemäss vorgesehenen Ausnehmung dort auch den federnden Riegel bildet. Aufgrund der Krümmung nach aussen greift der beabstandete Teil des Steges bzw. der derart gebildete federnde Riegel nach Einsetzen in die Profilschiene in die oben bereits ausführlich erläuterte Ausnehmung der Profilschiene ein. Grundsätzlich kann nur ein einziger Steg vorgesehen werden, wobei dessen Anordnung und Ausbildung sich nach der zugehörigen Ausnehmung der Profilschiene richtet. Es ist ersichtlich, dass zweckmässig zwei derart ausgebildete Stege mit nach aussen federnden Riegeln vorhanden sind, zumal dann jeder Riegel nur für den halben erforderlichen Federweg dimensioniert werden muss. Der federnde Riegel befindet sich zweckmässig in der Mitte und er erstreckt sich ferner zweckmässig auch etwa über die halbe Länge des Verblendungselements. Hierdurch ergibt sich ein günstiger Kompromiss im Hinblick einerseits auf Festigkeit und andererseits auf Federvermögen. Um das Einsetzen des Verblendungselements in die Profilschiene zu erleichtern, ist der beabstandete Teil des Steges und somit der federnde Riegel an seiner Aussenfläche zweckmässig abgeschrägt oder auch abgerundet.

Weitere erfindungswesentliche Merkmale ergeben sich aus den nachfolgend erläuterten Ausführungsbeispielen. Es zeigen:

Fig. 1 perspektivisch den Verbindungsbereich eines Rahmens mit zwei rechtwinklig verbundenen Profilschienen, wobei ein Verblendungselement mit einem Zapfen in eine Ausnehmung der einen Profilschiene eingreift;

Fig. 2 eine alternative Ausführungsform, bei welcher das Verblendungselement zwei an Hebel angeordnete Riegel aufweist;

Fig. 3 eine Ausführungsform, bei welcher an der Rückseite des Verblendungselements als Riegel eine federnde Zunge mit Zapfen vorgesehen ist;

Fig. 4 den Eckbereich eines Rahmens mit eingesetztem Verblendungselement;

Fig. 5 eine Aufsicht auf die Rückseite einer alternativen Ausführungsform des Verblendungselements;

Fig. 6 einen Schnitt entlang Schnittlinie VI gemäss Fig. 5.

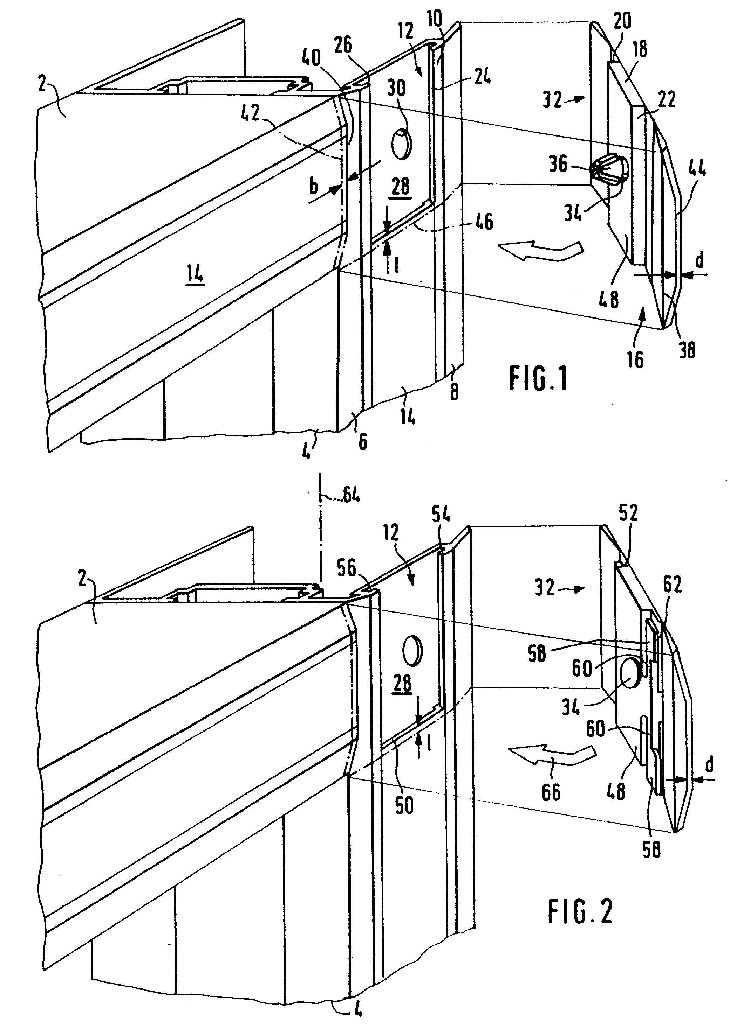

Die Fig. 1 zeigt den Verbindungsbereich von zwei Profilschienen 2, 4, welche in hier nicht näher dargestellter Weise miteinander verbunden sind. Es sei angemerkt, dass die Profilschiene 2 hinlänglich bekannte Schraubkanäle od. dgl. für Schrauben aufweisen kann, um eine feste Verbindung zwischen den Profilschienen 2 und 4 zu erhalten. Der Rahmen kann aus insgesamt vier senkrecht zueinander angeordneten derartigen Profilschienen bestehen, wobei hier nur das obere rechte Eck des Rahmens der Einfachheit halber dargestellt ist. Handelt es sich um eine Duschtrennwand, so weist die Profilschiene 2 hinlänglich bekannte Führungsschienen auf. An diesen, hier nicht weiter dargestellten Führungsschienen sind Schiebetüren in Richtung der Längsachse der Profilschiene 2 verschiebbar aufgehängt. Die Profilschiene 4 weist ebenso wie die Profilschiene 2 Seitenflächen 6, 8 auf, welche zur vorderen Oberfläche 10 der Profilschiene 4 unter einem vorgegebenen Winkel geneigt angeordnet sind. In der Mitte weist die Profilschiene 4, entsprechendes gilt für die Profilschiene 2, eine Längsnut 12 auf, in welcher ein Verblendungsprofil 14 angeordnet ist. Das Verblendungsprofil 14 ist kürzer als die Profilschiene 4, so dass im Verbindungsbereich die Längsnut 12 frei ist. Es ist ferner ein Verblendungselement 16 vorgesehen, welches mit seinem verstärkten Mittelteil 18 in der Längsnut 12 angeordnet werden kann. Aus Gründen der Übersichtlichkeit und zwecks besserer Erläuterung ist hier das Verblendungsprofil 14 aus der Profilschiene 4 herausgelöst dargestellt. Das Verblendungsprofil weist zwei seitliche Führungsflächen 20, 22 auf, welche an seitlichen Anlageflächen 24, 26 der Profilschiene 4 und/oder der Längsnut 12 anliegen. Es ist ersichtlich, dass somit eine gute Ausrichtung des Verblendungselements 16 bezüglich der Längsachse der Profilschiene 4 sichergestellt wird. In der Bodenfläche 28 der Längsnut 12 ist eine Ausnehmung 30 vorgesehen, welche in einfacher Weise als eine Bohrung ausgebildet ist. Entsprechend weist das Verblendungselement 16 an der Rückseite 32 einen Zapfen, welcher in die Ausnehmung eingreift, auf. Der Zapfen 34 ist mit vier federnden Riegeln 36 versehen, welche nach dem Einsetzen des Verblendungselements in die Profilschiene in der Bohrung einrastet und nachfolgend ein Herausfallen des Verblendungselements 16 verhindert. Durch Zusammendrücken der vier federnden Riegel 36 kann jedoch ohne weiteres wieder das Verblendungselement entfernt werden. Das der Profilschiene 2 zugeordnete Seitenteil 38 weist eine vergleichsweise geringe Dicke d auf und ragt um eine vorgegebene Breite b über die Stirnkante 40 der anderen Profilschiene 2 hinaus.

In der Zeichnung ist durch die strichpunktierte Linie 42 die Längskante 44 des Verblendungselements 16 angedeutet. Die Dicke d beträgt etwa 2 mm, so dass die überstehende Längskante 44 praktisch nicht ins Auge fällt. Wie ferner durch die strichpunktierte Linie 46 angedeutet, ragt das Verblendungselement 16 mit seinem unteren Endteil 48 über die Stirnfläche 50 des Verblendungsprofils 14 hinaus. Hierdurch wird in einfacher Weise eine symmetrische Ausgestaltung des Verbindungsbereiches erreicht, da sowohl das Endteil 48 als auch das Seitenteil 38 in entsprechender Weise überstehen. Es ist ersichtlich, dass somit Spalten oder unsaubere Schnittflächen an den Enden sowohl der Verblendungsprofile als auch der Profilschiene 2 durch das Verblendungselement abgedeckt werden, so dass bei dem erforderlichen Zurechtschneiden der besagten Teile auch keine besonderen Toleranzen eingehalten werden müssen. Das untere Endteil 48 ragt, wie mittels der Linie 46 angedeutet, um eine vorgegebene Länge 1 über die Stirnfläche 50 hinaus.

Fig. 2 zeigt eine alternative Ausführungsform, bei welcher an der Rückseite 32 des Verblendungselements 16 ein im wesentlichen zylindrischen Zapfen 34 vorgesehen ist. Das Mittelteil 18 des Verblendungselements 16 weist einen sich in Längsrichtung erstreckenden seitlichen Ansatz 52 auf, welcher in eine hinterschnittene Ausnehmung 54 der Profilschiene eingreift. Gegenüberliegend befindet sich eine weitere Ausnehmung 56 in der Profilschiene 4, wobei in letztere Ausnehmung 56 zwei Riegel 58 eingreifen. Diese Riegel 58 sind an den Enden von Hebeln 60 des Verblendungselements 16 angeordnet. Hierdurch werden vergleichsweise grosse Federwege für die derart ausgebildeten federnden Riegel 58 erreicht, so dass das Einsetzen des Verblendungselements 16 in die Profilschienen und/oder deren Längsnut 12 besonders einfach durchführbar ist. Die Riegel 58 sind zweckmässigerweise mit abgerundeten Kanten 62 versehen, um ein einfaches Einsetzen und Einklipsen sicherzustellen. Mittels des hier zylindrisch ausgebildeten Zapfens 34, welcher in die Ausnehmung 30 in der Bodenfläche 28 der Längsnut 12 eingreift, wird eine Fixierung des Verblendungselements 16 bezüglich der Längsachse 64 der Profilschiene 4 sichergestellt. Zum Einsetzen des Verblendungselements 16 wird dieses in Richtung des Pfeiles 66 in die Längsnut 12 eingesetzt, wobei zunächst der seitliche Ansatz 52 in die hinterschnittene Ausnehmung eingesetzt wird. Es ist ersichtlich, dass nachfolgend durch weiteres Eindrücken des Verblendungselements 16 die federnden Riegel 58 zunächst etwas zurückweichen, um dann anschliessend in die zugeordnete Ausnehmung 56 einzurasten.

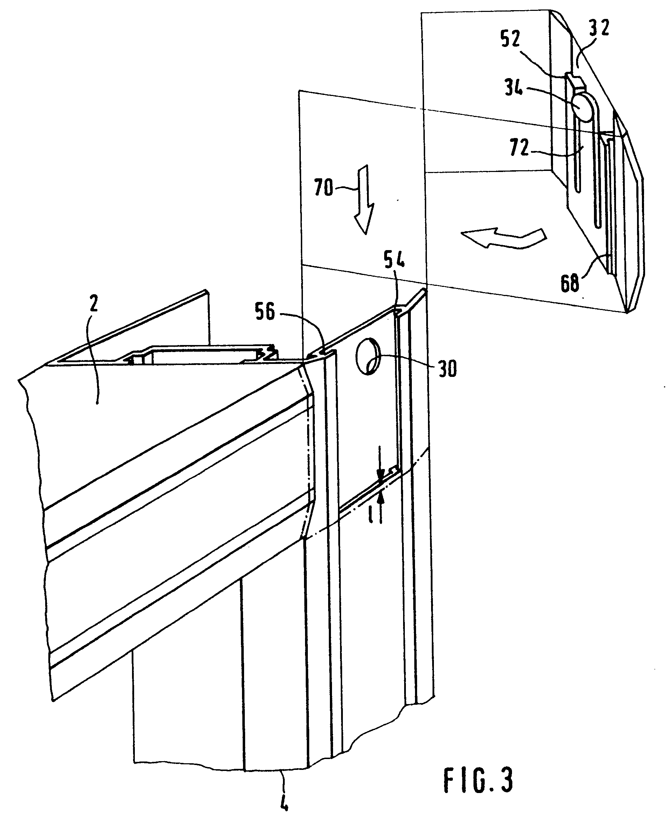

Bei der Ausführungsform gemäss Fig. 3 weist das Verblendungselement 16 zwei seitliche Ansätze 52, 68 auf, welche jeweils in die zugeordneten hinterschnittenen Ausnehmungen 54, 56 der Profilschiene eingreifen. Hierzu muss das Verblendungselement 16 in Richtung des Pfeiles 70 in die Profilschiene 4 eingeschoben werden. An der Rückseite des Verblendungselements befindet sich eine Zunge 72, an deren Ende der Zapfen 34 angeordnet ist. Diese federnde Zunge 52 weist zur Rückseite des Verblendungselements 16 einen gewissen Abstand auf, so dass diese federnde Zunge beim Einschieben in die Profilschiene entsprechend zurückgedrückt werden kann. Ist dann das Verblendungselement 16 vollständig in die Profilschiene 4 eingeschoben, so greift der Zapfen 34 in die zugeordnete Ausnehmung 30 der Profilschiene ein. Das Verblendungselement kann jederzeit wieder entfernt werden, wozu lediglich von hinten her der Zapfen 34 aus der Ausnehmung 30 herausgedrückt werden muss, so dass nachfolgend das Verblendungselement 16 entgegen der Richtung 70 wieder nach oben aus der Profilschiene 4 herausgeschoben werden kann.

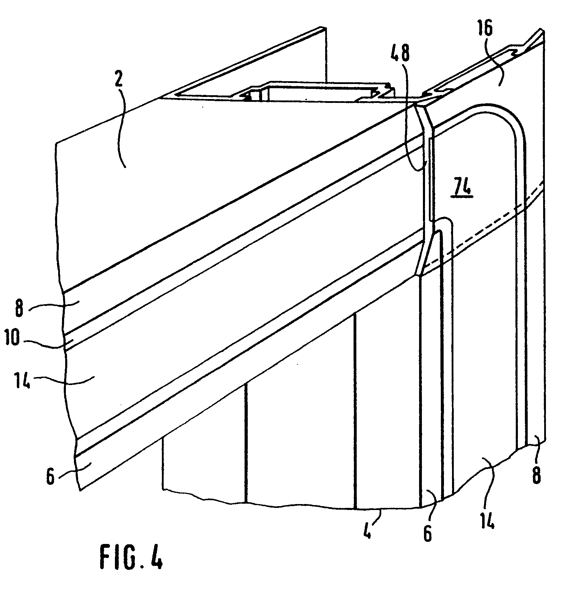

In Fig. 4 ist der Rahmen mit dem fertigmontierten Verblendungselement 16 dargestellt. Wie ersichtlich, weisen die Profilschienen 2, 4 bezüglich der vorderen Oberfläche 10 geneigt angeordnete Seitenflächen 6, 8 auf. Das Verblendungselement 16 ist im Bereich des Seitenteils 48 und auch des Endteils 58 derart ausgebildet, dass es direkt auch auf den geneigten Seitenflächen 6, 8 aufliegt. Somit wird eine besonders zweckmässige und günstige Anpassung mittels des Verblendungselements an die Profilschienen sichergestellt. Es bedarf keiner besonderen Hervorhebung, dass auch bei anders ausgebildeten Oberflächen der Profilschienen 2, 4 mit einem erfindungsgemäss ausgebildeten Verblendungselement 16 die erforderliche Anpassung ohne Schwierigkeit erreicht wird. Das Verblendungselement 16 weist erfindungsgemäss ferner ein Dekorelement 74 auf, welches in seiner farblichen oder sonstigen Ausgestaltung den Verblendprofilen 14 der beiden Profilschienen 2, 4 entspricht. Sind beispielsweise die Verblendungsprofile 14 als Holzprofile ausgebildet, so kann mittels eines dünnen Dekorelements, beispielsweise in Form einer Folie oder eines Holzfurniers die gewünschte Anpassung ohne Schwierigkeit erreicht werden.

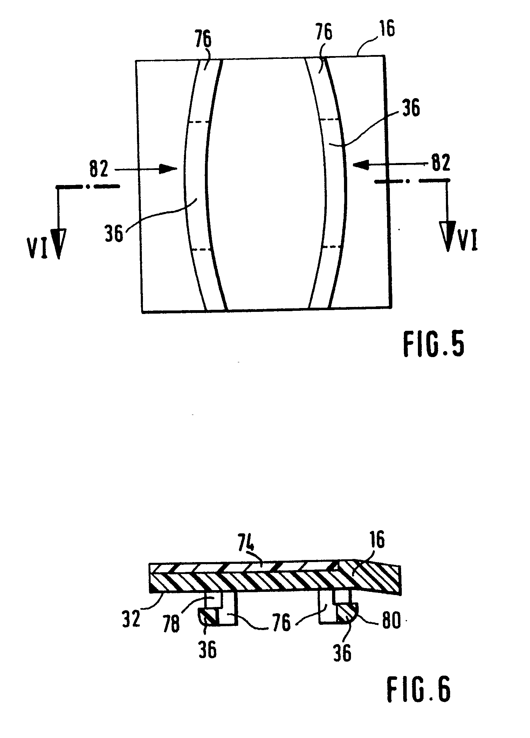

Fig. 5 zeigt eine weitere Ausführungsform des Verblendungselementes 16, und zwar in einer Aufsicht auf die Rückseite 32. Dort sind zwei nach aussen gekrümmte Stege 76 vorhanden, welche etwa in der Mitte den grössten Abstand zueinander aufweisen. In Verbindung mit Fig. 6, in welcher ein Schnitt entlang Schnittlinie VI dargestellt ist, sind Ausnehmungen 78 in beiden Stegen 76 erkennbar. Aufgrund dieser Ausnehmungen 78 bilden die von der Rückseite 32 beabstandeten Teile der Stege federnde Riegel 36, die in Richtung der Pfeile 82 nach innen gedrückt werden können. Die Ausnehmungen 78 sind im wesentlichen etwa in der Mitte angeordnet und sie erstrecken sich ferner etwa über die halbe Länge des Verblendungselements 16. Es sei an dieser Stelle angemerkt, dass das Verblendungselement hier aus einem geeigneten, elastisch federnden Werkstoff besteht, damit die erläuterte Federwirkung sich ergibt. Die Aussenflächen 80 der federnden Riegel 36 sind abgeschrägt oder auch abgerundet ausgebildet, wodurch das Einsetzen in die zugeordnete Profilschiene nicht unwesentlich erleichtert wird. Aufgrund der erfindungsgemäss vorgesehenen, nach aussen gerichteten Krümmung greifen die federnden Riegel 36 nach Einsetzen in eine Profilschiene in die zugeordneten Ausnehmungen ein, wodurch ein fester und zuverlässiger Sitz gewährleistet wird. Das an der vorderen Oberfläche vorgesehene Dekorelement 74 ist in Fig. 6 ebenfalls erkennbar.

Bezugszeichenliste

| 2, 4 | Profilschiene |
| 6, 8 | Seitenfläche |
| 10 | vordere Oberfläche |
| 12 | Längsnut |
| 14 | Verblendungsprofil |
| 16 | Verblendungselement |
| 18 | Mittelteil |
| 20, 22 | Führungsfläche |
| 24, 26 | Anlagefläche |
| 28 | Bodenfläche |
| 30 | Ausnehmung |
| 32 | Rückseite |
| 34 | Zapfen |
| 36 | Riegel |
| 38 | Seitenteil |
| 40 | Stirnkante |
| 42 | strichpunktierte Linie |
| 44 | Längskante |
| 46 | strichpunktierte Linie |
| 48 | Endteil |
| 50 | Stirnfläche |
| 52 · | seitlicher Ansatz |
| 54, 56 | Ausnehmung |
| 58 | Riegel |
| 60 | Hebel |
| 62 | Kante |
| 64 | Längsachse |
| 66 | Pfeil |
| 68 | seitlicher Ansatz |
| 70 | Pfeil |
| 72 | Zunge |
| 74 | Dekorelement |
| 76 | Steg |
| 78 | Ausnehmung von 76 |
| 80 | Aussenfläche |
| 82 | Pfeil |

**Patentansprüche**

1. Rahmen, insbesondere für eine Duschtrennwand, mit Profilschienen (2, 4), die im Bereich der Rahmenecken miteinander verbunden sind, wobei die Profilschienen (2, 4) insbesondere Verblendungsprofile (14) aufweisen, welche mittels federnden Riegeln in Ausnehmungen (54, 56) der Profilschienen (2, 4) eingreifen, dadurch gekennzeichnet, dass ausschliesslich im Bereich der Rahmenecke ein Verblendungselement (16) angeordnet und mittels eines federnden Riegels (36, 58) mit der einen Profilschiene (4) verbunden ist, und dass das Verblendungselement (16) mit einem Seitenteil (38) in einer vorgegebenen Breite (b) über die Stirnkante (40) der anderen Profilschiene (2) hinausragt.

2. Rahmen nach Anspruch 1, dadurch gekennzeichnet, dass das Verblendungselement (16) eine Führungsfläche (20, 22) aufweist, welcher eine Anlagefläche (24, 26) der einen Profilschiene (4) zugeordnet ist.

3. Rahmen nach Anspruch 1 oder 2, dadurch gekennzeichnet, dass das Verblendungselement (16) ein Mittelteil (18) aufweist, welches in eine Längsnut (12) der einen Profilschiene (4) eingreift.

4. Rahmen nach einem der Ansprüche 1 bis 3, dadurch gekennzeichnet, dass die Anlagefläche (24, 26) der Profilschiene (4) an einer Seitenwand der Längsnut (12) vorgesehen ist, wobei die Führungsfläche (20, 22) des Verblendungselements (16) sich bevorzugt über dessen gesamte Länge erstreckt.

5. Rahmen nach einem der Ansprüche 1 bis 4, dadurch gekennzeichnet, dass das Verblendungselement (16) einen seitlichen Ansatz (52, 58) aufweist, welcher in die hinterschnittene Ausnehmung (54, 56) der Profilschiene (4) eingreift.

6. Rahmen nach einem der Ansprüche 1 bis 5, dadurch gekennzeichnet, dass das Verblendungselement (16) mit seiner bevorzugt am verstärkten Mittelteil (18) vorhandenen Grundfläche an der Bodenfläche (28) der Längsnut (12) anliegt.

7. Rahmen nach einem der Ansprüche 1 bis 6, dadurch gekennzeichnet, dass das Seitenteil (38) eine geringe Dicke (d) aufweist, welche bevorzugt im Bereich von 1 bis 4 mm, zweckmässig im Bereich von 1,5 bis 3 mm, liegt.

8. Rahmen nach einem der Ansprüche 1 bis 7, dadurch gekennzeichnet, dass das Verblendungselement (16) mit seinem Endteil (48) in einer vorgegebenen Länge (1) über die Stirnfläche (50) des Verblendungsprofils (14) der einen Profilschiene (4) hinausragt.

9. Rahmen nach einem der Ansprüche 1 bis 8, dadurch gekennzeichnet, dass die eine Profilschiene (4) eine bevorzugt als Bohrung ausgebildete Ausnehmung (30) aufweist, in welche ein im wesentlichen senkrecht zur Längsachse (4) der Profilschiene (4) ausgerichteter Zapfen (34) des Verblendungselements (16) eingreift.

10. Rahmen nach Anspruch 9, dadurch gekennzeichnet, dass der Zapfen (34) mit wenigstens einem federnden Riegel (36) versehen ist (Fig. 1).

11. Rahmen nach einem der Ansprüche 1 bis 10, dadurch gekennzeichnet, dass das Verblendungselement (16) wenigstens einen in Richtung der Längsachse (64) der Profilschiene (4) sich erstreckenden Hebel (60) aufweist, an dessen Ende der Riegel (58) angeordnet ist, welcher in die seitliche Ausnehmung (56) der Profilschiene (4) und/oder deren Längsnut (12) eingreift (Fig. 2).

12. Rahmen nach einem der Ansprüche 9 bis 11, dadurch gekennzeichnet, dass das Verblendungselement (16) eine von seiner Rückseite (32) beabstandete Zunge (72) aufweist, an deren Ende der in die zugeordnete Ausnehmung (30) der Profilschiene (12) eingreifende Zapfen (34) angeordnet ist (Fig. 3).

13. Rahmen nach einem der Ansprüche 1 bis 8, dadurch gekennzeichnet, dass das Verblendungselement (16) auf seiner Rückseite (32) wenigstens einen, nach aussen gekrümmten Steg (76) aufweist und dass in dem Steg (76) eine Ausnehmung (78) derart vorhanden ist, dass ein von der Rückseite (32) beabstandeter Teil des Steges den federnden Riegel (36) bildet (Fig. 5).

14. Rahmen nach Anspruch 13, dadurch gekennzeichnet, dass die Ausnehmung (78) bzw. der federnde Riegel (36) zumindest näherungsweise in der Mitte des Verblendungselements (16) angeordnet ist und sich bevorzugt über dessen halbe Länge erstreckt.

15. Rahmen nach einem der Ansprüche 1 bis 14, dadurch gekennzeichnet, dass der federnde Riegel (36) im Bereich seiner Aussenfläche (80) abgeschrägt oder abgerundet ist.

16. Rahmen nach einem der Ansprüche 1 bis 15, dadurch gekennzeichnet, dass die Profilschienen (2, 4) Seitenflächen (6, 8) aufweisen, welche bezüglich der vorderen Oberfläche (10) geneigt angeordnet sind, und dass das Verblendungselement (16) mit dem Seitenteil (38) und dem Endteil (48) auch an den geneigten Seitenflächen (6, 8) anliegt.

## Claims

1. A frame, more particularly for a partition wall of a shower, having profile rails (2, 4), which are connected to one another in the region of the frame corners, the profiled tracks (2, 4) more particularly comprising facing profiles (14), which engage by means of resilient bolts in recesses (54, 56) in the profile rails (2, 4), characterised in that a facing element (16) is arranged exclusively in the region of the frame corner and connected by means of a resilient bolt (36, 58) with one profile rail (4), and the facing element (16) projects with a side portion (38) having a given width (b) beyond the front edge (40) of the other profile rail (2).

2. A frame according to claim 1, characterised in that the facing element (16) comprises a guide surface (20, 22), with which an abutment surface (24, 26) of one profile rail (4) is associated.

3. A frame according to claim 1 or 2, characterised in that the facing element (16) comprises a centre portion (18), which engages in a longitudinal groove (12) in one profile rail (4).

4. A frame according to any one of claims 1 to 3, characterised in that the abutment surface (24, 26) of the profile rail (4) is provided on a lateral wall of the longitudinal groove (12), the guide surface (20, 22) of the facing element (16) preferably extending over the entire length of the said facing element (16).

5. A frame according to any one of claims 1 to 4, characterised in that the facing element (16) comprises a lateral extension (52, 58), which engages in the undercut recess (54, 56) in the profile rail (4).

6. A frame according to any one of claims 1 to 5, characterised in that the facing element (16) abuts preferably with the surface area provided on its reinforced centre portion (18) against the base (28) of the longitudinal groove (12).

7. A frame according to any one of claims 1 to 6, characterised in that the lateral portion (38) has a small thickness (d), which is preferably in the region of 1 to 4 mm, and expediently in the region of 1.5 to 3 mm.

8. A frame according to any one of claims 1 to 7, characterised in that the facing element (16) projects with a given length (1) of its end portion (48) beyond the front surface (50) of the facing profile (14) of one profile rail (16).

9. A frame according to any one of claims 1 to 8, characterised in that one profile rail (4) comprises a recess (30) preferably formed as a bore, in which recess (30) a plug (34) of the facing element (16) engages, which plug (34) is positioned substantially perpendicular to the longitudinal axis (4) of the profile rail (4).

10. A frame according to any one of claims 1 to 9, characterised in that the plug (34) is provided with at least one resilient bolt (36) (fig. 1).

11. A frame according to any one of claims 1 to 10, characterised in that the facing element (16) comprises at least one lever (60) extending in the direction of the longitudinal axis (64) of the profile rail (4), at the end of which lever (60) the bolt (58) is arranged, which engages in the lateral recess (56) of the profile rail (4) and/or the longitudinal groove (12) of the said profile rail (4) (fig. 2).

12. A frame according to any one of claims 9 to 11, characterised in that the facing element (16) comprises a tongue (72) projecting from its rear (32), at the end of which tongue (72) the plug (34) is arranged, which engages in the associated recess (30) in the profile rail (12) (fig. 3).

13. A frame according to any one of claims 1 to 8, characterised in that, on its rear (32), the facing element (16) comprises at least one outwardly curved crosspiece (76), and a recess (78) is provided in the said crosspiece (76), such that a portion of the crosspiece projecting from the rear (32) forms the resilient bolt (36) (fig. 5).

14. A frame according to claim 13, characterised in that the recess (78) or the resilient bolt (36) is arranged at least approximately in the centre of the facing element (16) and preferably extends over half the length of the said facing element (16).

15. A frame according to any one of claims 1 to 14, characterised in that the resilient bolt (36) is bevelled or rounded off in the region of its outer surface (80).

16. A frame according to any one of claims 1 to 15, characterised in that the profile rails (2, 4) comprise lateral surfaces (6, 8), which are arranged inclined relative to the front surface (10), and the facing element (16) also abuts with its lateral portion (38) and its end portion (48) against the inclined lateral surfaces (6, 8).

**Revendications**

1. Châssis, notamment pour une cloison de douche, comprenant des profilés (2, 4) qui sont assemblés l'un à l'autre dans la région des angles du châssis, les profilés (2, 4) présentant en particulier des moulures de parement (14) qui sont engagées dans des évidements (54, 56) des profilés (2, 4) au moyen de verrous élastiques, caractérisé en ce qu'un élément de parement (16) est disposé exclusivement dans la région de l'angle du châssis et assemblé à l'un des profilés (4) au moyen d'un verrou élastique (36, 58), et en ce que l'élément de parement (16) déborde d'une largeur prédéterminée (b) au-delà du bord frontal (40) de l'autre profilé (2) par une partie latérale (38).

2. Châssis selon la revendication 1, caractérisé en ce que l'élément de parement (16) présente une surface de guidage (20, 22) à laquelle est conjuguée une surface de portée (24, 26) d'un profilé (4).

3. Châssis selon la revendication 1 ou la revendication 2, caractérisé en ce que l'élément de parement (16) présente une partie centrale (18) qui est engagée dans une rainure longitudinale (12) d'un profilé (4).

4. Châssis selon l'une des revendications 1 à 3, caractérisé en ce que la surface de portée (24, 26) du profilé (4) est prévue sur un flanc de la rainure longitudinale (12), la surface de guidage (20, 22) de l'élément de parement (16) s'étendant de préférence sur toute la longueur de cet élément.

5. Châssis selon l'une des revendications 1 à 4, caractérisé en ce que l'élément de parement (16) présente un talon latéral (52, 58) qui est engagé dans l'évidement à contre-dépouille (54, 56) du profilé (4).

6. Châssis selon l'une des revendications 1 à 5, caractérisé en ce que l'élément de parement (16) est appuyé contre la surface de fond (28) de la rainure longitudinale (12) par sa surface de base qui est de préférence prévue le long de la partie centrale épaissie (18).

7. Châssis selon l'une des revendications 1 à 6, caractérisé en ce que la partie latérale (38) présente une faible épaisseur (d) qui est de préférence comprise entre 1 et 4 mm, avantageusement entre 1,5 et 3 mm.

8. Châssis selon l'une des revendications 1 à 7, caractérisé en ce que l'élément de parement (16) déborde d'une longueur prédéterminée (1) au-delà de la surface frontale (50) de la moulure de parement (14) d'un profilé (4) par sa partie d'extrémité (48).

9. Châssis selon l'une des revendications 1 à 8, caractérisé en ce qu'un profilé (4) présente un évidement (30), de préférence constitué par un perçage dans lequel s'engage un tenon (34) de l'élément de parement (16) qui est orienté sensiblement perpendiculairement à l'axe longitudinal (64) du profilé (4).

10. Châssis selon la revendication 9, caractérisé en ce que le tenon (34) est muni d'au moins un verrou élastique (36) (fig. 1).

11. Châssis selon l'une des revendications 1 à 10, caractérisé en ce que l'élément de parement (16) présente au moins un levier (60) qui s'étend parallèlement à l'axe longitudinal (64) du profilé (4), et à l'extrémité duquel est disposé le verrou (58) qui s'engage dans l'évidement latéral (56) du profilé (4) et/ou de sa rainure longitudinale (12) (fig. 2).

12. Châssis selon l'une des revendications 9 à 11, caractérisé en ce que l'élément de parement (16) présente une languette (72) espacée de sa face arrière (32) et à l'extrémité de laquelle est disposé le tenon (34) qui s'engage dans l'évidement correspondant (3) du profilé (12) (fig. 3).

13. Châssis selon l'une des revendications 1 à 8, caractérisé en ce que l'élément de parement (16) présente sur sa face arrière (32) au moins une nervure (76) et en ce qu'un évidement (78) est prévu dans la nervure (76) de telle manière qu'une partie de la nervure qui est espacé de la face arrière (32) forme le verrou élastique (36) (fig. 5).

14. Châssis selon la revendication 13, caractérisé en ce que l'évidement (78) ou le verrou élastique (36) est disposé au moins approximativement au milieu de l'élément de parement (16) et s'étend de préférence sur la moitié de sa longueur.

15. Châssis selon l'une des revendications 1 à 14, caractérisé en ce que le verrou élastique (36) est chanfreiné ou arrondi dans la région de la surface extérieure (80).

16. Châssis selon l'une des revendications 1 à 15, caractérisé en ce que les profilés (2, 4) présentent des surfaces latérales (6, 8) qui sont inclinées par rapport à la surface avant (10) et en ce que l'élément de parement (16) est également appuyé sur les surfaces latérales inclinées (6, 8) par sa partie latérale (38) et sa partie d'extrémité (48).

FIG.1

FIG.2

FIG.3

FIG. 4

0111185

FIG.5

FIG.6